# EUROPÄISCHE PATENTSCHRIFT

(11) **EP 0 819 914 B1**
(45) Veröffentlichungstag und Bekanntmachung des Hinweises auf die Patenterteilung: **22.08.2001**
(21) Anmeldenummer: 97111146.3
(22) Anmeldetag: 03.07.1997
(51) Int. Cl.: G01D 5/36, G01D 5/347

(54) **Drehimpulsgeber**
Rotational pulse generator
Générateur d'impulsions rotationnel

(30) Priorität: 19.07.1996 DE 19629215
(43) Veröffentlichungstag der Anmeldung: 21.01.1998
(73) Patentinhaber: IMG Drehimpulsgeber GmbH, 50259 Pulheim (DE)
(72) Erfinder: Kruse, Bernd, Dipl.-Ing., 42799 Leichlingen (DE)
(74) Vertreter: Bauer, Wulf, Dr.

(56) Entgegenhaltungen:
- FR-A- 2 240 435
- JP-A- 60 175 825
- JP-A- 62 269 012

## Beschreibung

Die Erfindung bezieht sich auf einen Drehimpulsgeber mit einem Gehäuse, das einen Flansch aufweist, mit einer Welle, die drehbar im Flansch gelagert ist, mit einer Codescheibe, die mit der Welle drehverbunden ist und mit einer mit der Codescheibe zusammenwirkenden Abtasteinheit, die a) mindestens einen Lichtemitter und mindestens einen, diesem zugeordneten Lichtempfänger aufweist, wobei sich die Codescheibe zwischen Lichtemitter und Lichtempfänger befindet, und die b) gegenüber der Codescheibe verstellbar ist.

Bei einem derzeit bereits auf dem Markt befindlichen Drehimpulsgeber dieser Art, der von der Anmelderin vertrieben wird, ist die Abtasteinheit über mehrere Schrauben und Abstandsbolzen am Flansch festgelegt. In einem Tragteil der Abtasteinheit sind Löcher vorgesehen, durch die die Schrauben hindurchgreifen. Diese Löcher haben ein Übermaß. Durch Lockern der Schrauben kann die Abtasteinheit gegenüber der Codescheibe verstellt werden. Ist die richtige Einstellung gefunden, werden die Schrauben festgezogen und möglichst auch gesichert.

Bei dem vorbekannten Drehimpulsgeber hat die Codescheibe eine ringförmige Strichcodierung, dieser sind zwei Paarungen aus jeweils einem Lichtemitter und einem Lichtempfänger zugeordnet. Als Lichtemitter wird eine lichtemittierende Diode (LED) und als Lichtempfänger ein Fototransistor oder eine Fotodiode eingesetzt. Die beiden Paarungen aus jeweils einem Lichtemitter und einem Lichtempfänger sind winkelmäßig so gegeneinander versetzt, dass sich der Lichtweg der einen Paarung über einem undurchsichtigen Bereich (Strich) der Strichcodierung befindet, wenn sich der Lichtweg der anderen Paarung über einem durchsichtigen Bereich (Fenster) befindet. Dies ist die optimale Einstellung, die durch Justierung der Abtasteinheit gegenüber der Codescheibe eingestellt wird. Aufgrund der zwei Paarungen und ihrer beschriebenen Anordnung ist es möglich, die Drehrichtung zu ermitteln.

Durch die Einstellung der Abtasteinheit gegenüber der Codescheibe wird die Phasenlage der elektrischen, von den beiden Lichtempfängern erhaltenen Signale justiert.

Bei dem vorbekannten Drehimpulsgeber ist nun die Einstellbarkeit der Abtasteinheit gegenüber der Codescheibe nicht praxisgerecht und mit Nachteilen behaftet. Nach Lösen der Schrauben ist eine präzise Einstellung durch Verschieben der Abtasteinheit gegenüber der Codescheibe nur mit großem Geschick möglich, das anschließende Fixieren der Abtasteinheit durch Anziehen der Schrauben bewirkt zumeist wieder einen Fehler. Auch ein späteres, selbsttätiges Verstellen ist nicht ausgeschlossen. Insgesamt ist eine präzise und beständige Justierung der Abtasteinheit gegenüber der Codescheibe nicht erreicht.

Die JP 62269012 offenbart einen Drehgeber, bei dem durch eine exzentrische Lagerung der Welle eine Justiermöglichkeit gegeben ist, die aber verhättnismäßig kompliziert ist.

Die Erfindung hat es sich zur Aufgabe gemacht, eine reproduzierbar genaue und auch im praktischen Betrieb dauerhafte Einstellung der Abtasteinheit gegenüber der Codescheibe anzugeben. Gelöst wird diese Aufgabe ausgehend von dem Drehimpulsgeber mit den Merkmalen des Oberbegriffs des Anspruchs 1 dadurch, dass die Abtasteinheit auf einem Kreisbogen bewegbar angeordnet ist, der ein Zentrum hat, das gegenüber der Achse der Welle um das Exzentermaß e versetzt ist.

Erfindungsgemäß wird also die Abtasteinheit nach Lösen ihrer Haltemittel nicht einfach freigegeben und innerhalb der vorgegebenen Toleranz eine Einstellung ermöglicht, sondern es wird für die Einstellung eine präzise Bahn vorgegeben, nämlich eine Kreisbahn, die exzentrisch zum Zentrum der Codescheibe ist. Das Exzentermaß beträgt e. Es sind Mittel vorgesehen, um die Abtasteinheit auf ihrer Kreisbahn zu fixieren, vorzugsweise an jedem beliebigen Punkt dieser Kreisbahn.

Erfindungsgemäß ist der Weg, auf dem die Abtasteinheit gegenüber der Codescheibe verstellt werden kann, wesentlich größer als der kurze Hub, um den die Abtasteinheit bisher bei Geräten nach dem Stand der Technik gegenüber Codescheibe verstellt werden kann. Der maximale Verstellweg ist nunmehr die Länge eines Kreisbogens, um den die Abtasteinheit bewegbar angeordnet ist. Aufgrund der Symmetrie genügt dabei eine Bewegung um 180 Grad, weil Winkel zwischen 180 und 360 Grad wieder die selben Relativpositionen bringen. Es können aber auch kürzere Bogenstücke als 180 Grad vorgesehen werden. Besonders bevorzugt ist eine Drehung um 360 Grad zwischen der Abtasteinheit und der Codescheibe.

Aufgrund des deutlich größeren und präzise vorgegebenen Verstellweges kann eine wesentlich genauere Justierung der Abtasteinheit gegenüber der Codescheibe vorgenommen werden. Für den praktischen Betrieb bedeutet dies zugleich, dass eine Verstellung der einmal erreichten Justierung nicht zu befürchten ist und insbesondere eine Verstellung um einen kleinen Weg, wie sie beim Stand der Technik schon zu einer falschen Justierung der Abtasteinheit gegenüber der Codescheibe führen würde, bei der Erfindung praktisch im Ausgangssignal nicht nachweisbar ist.

Die Erfindung macht sich insbesondere bei kleinen Drehimpulsgebern bemerkbar, bei denen die Codescheibe im Durchmesser kleiner als 20, insbesondere kleiner als 10 mm ist. Bei derartigen Drehimpulsgebern hat sich beim vorbekannten Gerät die Justierung der Abtasteinheit gegenüber der Codescheibe in der Praxis als sehr schwierig erwiesen, weiterhin ist für die Fixierung der Abtasteinheit relativ wenig Platz vorhanden. Die Erfindung ermöglicht hier neue Konstruktionen, die Fixierung der Abtasteinheit kann an einer Stelle erfolgen, wo trotz der kleinen Baugröße noch ausreichend Platz ist.

In einer besonders bevorzugten Ausführung ist das Exzentermaß e kleiner als das radiale Maß der Informationen auf der Codescheibe, insbesondere bei einer als Strichcodescheibe ausgebildeten Codescheibe als das radiale Maß der Striche. Bei einer 180 Grad-Drehung der Abtasteinheit wird gegenüber der Codescheibe ein Weg beschrieben (Verstellweg), der einen Großteil der radialen Erstreckung der Codeinformationen überdeckt. Damit ist vorteilhafterweise das Exzentermaß e im Bereich von 10 bis 90 %, vorzugsweise 20 bis 30 % der radialen Erstreckung des Strichcodes bzw. der Information auf der Codescheibe. Bei einer Verstellung der Abtasteinheit gegenüber der Codescheibe entlang des Verstellweges wird damit eine Positionierung zwischen dem mindestens einen Paar aus Lichtempfänger und Lichtemitter auf der einen Seite und der Codescheibe auf der anderen Seite erreicht, bei dem die praktisch sinnvollen radialen Positionen erreicht werden.

In einer bevorzugten Weiterbildung hat das Gehäuse eine Abdeckung, die Abtasteinheit ist mit dieser Abdeckung verbunden und die Abdeckung ist gegenüber dem Flansch drehbar, nämlich auf der genannten Exzenterbahn, bewegbar und einstellbar. Auf diese Weise wird durch Verdrehen des Flansches gegenüber der Abdeckung die erfindungsgemäße Justierung zwischen Abtasteinheit und Codescheibe erreicht.

In einer anderen bevorzugten Ausführung ist ein Ring vorgesehen, der über Spannmittel gegen den Flansch gezogen werden kann und befindet sich ein Teilstück der Abdeckung zwischen dem Flansch und diesem Ring. Auf diese Weise kann die Abdeckung fixiert werden. Der Ring ist vorzugsweise als exzentrischer Ring ausgeführt.

Weitere Vorteile und Merkmale der Erfindung ergeben sich aus den übrigen Ansprüchen sowie der nun folgenden Beschreibung von zwei nicht einschränkend zu verstehenden Ausführungsbeispielen der Erfindung, die im folgenden unter Bezugnahme auf die Zeichnung näher erläutert werden. In dieser zeigen:
- Fig. 1:: einen axialen Längsschnitt durch einen Drehimpulsgeber entsprechend der Schnittlinie I - I in Fig. 2,
- Fig. 2:: eine Ansicht des Drehimpulsgebers gemäß Figur 1 bei abgenommenen Deckel und im wesentlichen entfernten Einbauten zur Darstellung der Exzentrizität, die Abtasteinheit ist angedeutet,
- Fig. 3:: eine Darstellung ähnlich Figur 2, jedoch nunmehr mit Codescheibe,
- Fig. 4:: eine Darstellung wie Figur 3, jedoch mit nunmehr um 90 Grad verdrehter Abtasteinheit und
- Fig. 5:: eine Darstellung entsprechend Figur 1 für ein zweites Ausführungsbeispiel.

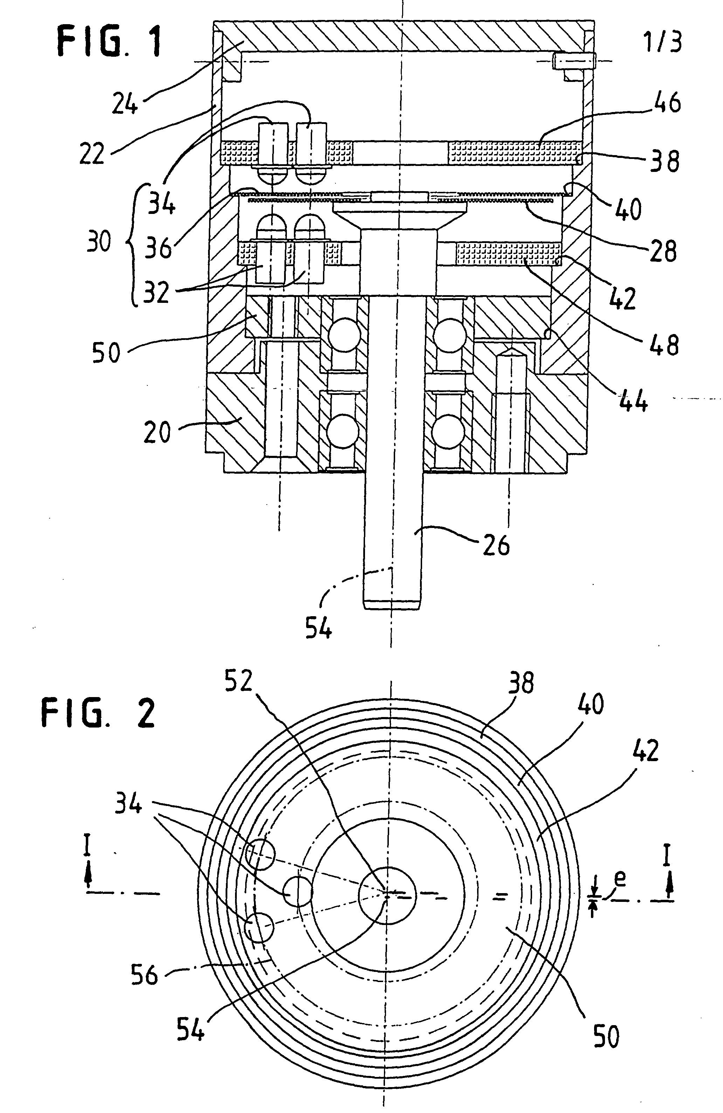

Wie aus dem ersten Ausführungsbeispiel gemäß den Figuren 1 bis 4 ersichtlich ist, hat der Drehimpulsgeber ein Gehäuse, das einen Flansch 20, eine Abdeckung 22 in Form eines Hohlzylinders, der innen gestuft ausgeführt ist, und einen Deckel 24, der den Hohlzylinder oben abschließt. Im Flansch 20 ist drehbar eine Welle 26 gelagert, hierfür sind zwei Kugellager vorgesehen, die axial hintereinander angeordnet sind. Mit der Welle 26 ist an ihrem im Gehäuse befindlichen Endbereich eine Codescheibe 28 verbunden. Das andere Ende der Welle 26 ragt frei nach unten gegenüber dem Flansch 20 vor, hier kann eine Drehbewegung angreifen, die dann in Drehwinkelschritten erfaßt wird.

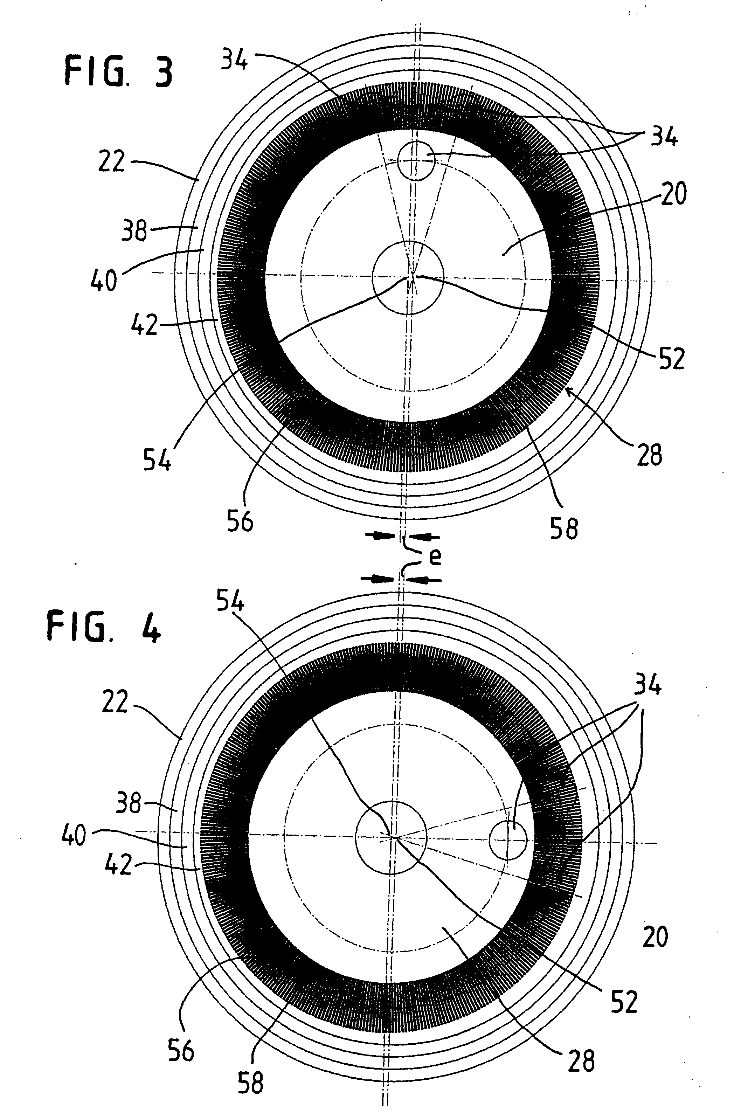

Der Codescheibe 28, die in den beiden Ausführungsbeispielen stets als Strichcodescheibe (siehe Figuren 3 und 4) ausgeführt ist, ist eine Abtasteinheit 30 zugeordnet, die in den gezeigten Ausführungsbeispielen optisch arbeitet, aber auch anders, beispielsweise magnetisch oder dergleichen, arbeiten kann. Ihr ist mindestens ein Lichtemitter 32 und ein in dessen Lichtweg befindlicher Lichtempfänger 34 zugeordnet. In den gezeigten Ausführungsbeispielen sind jeweils drei Lichtemitter 32, die als lichtemittierende Dioden (LED) ausgebildet sind, und drei als Fototransistoren ausgeführte Lichtempfänger 34 zugeordnet. Zwei äußere Paarungen 32, 34 sind winkelmäßig versetzt um ca. 30 bis 40 Grad und im wesentlichen auf dem gleichen Kreisbogen angeordnet, sie arbeiten mit der Codeinformation für Winkel, z. B. Strichcode, der Codescheibe 28 zusammen. Eine dritte, innere Paarung 32, 34 erfaßt eine Markierung der Codescheibe 28, mit der pro vollständiger Umdrehung ein Impuls erhalten wird. Weiterhin gehört in den gezeigten Ausführungsbeispielen zur Abtasteinheit eine Blende 36, die im Bereich des optischen Weges zwischen Lichtemitter und Lichtempfänger angeordnet ist und eine Strichcodierung wie die Codescheibe 28 aufweist.

Die Abtasteinheit 30 bildet eine Unterbaugruppe des erfindungsgemäßen Drehimpulsgebers, die separat für sich bewegbar ist, wie noch im folgenden erläutert werden wird.

Im Ausführungsbeispiel nach den Figuren 1 bis 4 ist die als Hohlzylinder ausgebildete Abdeckung 22 innen gestuft ausgeführt, man erkennt insgesamt vier Stufen, die in dem drehsymmetrischen Bauteil Abdeckung 22 durch Drehen oder ähnliche Bearbeitung hergestellt sind. Ausgehend vom Deckel 24, der auf den freien Endbereich der Abdeckung 22 aufgesetzt ist, verringert sich der lichte Innendurchmesser der Abdeckung 22 mit jeder Stufe. Die Stufen bilden jeweils Absätze, auf denen Bauteile ruhen und befestigt sind. So liegt an der ersten Stufe 38 ein Träger 46 in Form einer Ringscheibe an, er nimmt die drei Lichtempfänger 34 auf. An der nächsten Stufe 40 ist die Blende 36 gehalten, die insgesamt als Scheibe ausgeführt ist oder eine Scheibe ist, die nur im Bereich des Lichtdurchtrittes mit einem Strichmuster versehen ist. An der dritten Stufe 42 liegt ein Träger 48 ähnlich dem Träger 46 an, er nimmt die drei Lichtemitter 32 auf. Alle diese beschriebenen Bauteile sind jeweils gegenüber der Abdeckung 22 festgelegt, so dass sie mit dieser verbunden sind.

An der vierten Stufe 44 liegt schließlich ein Ring 50, er ist exzentrisch ausgebildet. Sein Außenumfang ist zentrisch zu einer Achse 52, die auch die Drehachse der Abdeckung 22 und damit der mit ihr verbundenen Bauteile ist. Sein Innenmantel ist zentrisch zu einer Achse 54, die auch die Achse der Welle 26 und damit der Codescheibe 28 ist. Die beiden Achsen 52, 54, die aus Figur 2 beispielsweise ersichtlich sind, haben einen Abstand e voneinander, e ist das Maß der Exzentrizität.

Wird die Abdeckung 22 gegenüber dem Flansch 20 verdreht, so bewegt sich die Abtasteinheit 30 auf einer Kreisbahn, die konzentrisch zur Achse 52 ist. Gegenüber der Achse 54, die die Achse der Codescheibe 28 ist, hat diese eine Exzentrizität wie aus den Figuren 2 bis 4 ersichtlich ist. Damit bewegt sich die Abtasteinheit 30 auf einer Bewegungsbahn 56, die den codierten Bereich der Codescheibe 28, nämlich die Strichcodierung 58, in unterschiedlichen radialen Positionen durchläuft, siehe Figuren 3 und 4.

Durch Verdrehen der Abdeckung 22 gegenüber dem Flansch 20 kann die Phasenlage der beiden Signale, die von den der Strichcodierung 58 zugeordneten beiden Lichtemittern 32 und Lichtempfängern 34 resultieren, justiert werden.

Wie Figur 1 zeigt, hat der Ring 50 mindestens eine Gewindebohrung und befindet sich durch einen Spalt getrennt oberhalb des Flansches 20. Die vierte Stufe 44 der Abdeckung 22 befindet sich zwischen dem Ring 50 und dem Flansch 20. Wird der Ring 50 gegen den Flansch gezogen, so wird die Abdeckung 22 fest eingespannt. Der Flansch 20 hat Bohrungen, die mit den Gewindebohrungen im Ring 50 in Übereinstimmung gebracht werden können. Durch in den Bohrungen angeordnete Schrauben kann somit die Abdeckung 22 festgespannt und gelockert werden. Sie wird gelockert, um eine Dreheinstellung durchführen zu können und nach vorgenommener Justierung wieder festgespannt.

Das Exzentrizitätsmaß e ist so gewählt, dass im Rahmen der beschriebenen Verstellbewegung entlang der Bewegungsbahn 56 die Lichtwege beider Lichtemitter 32 bzw. Lichtempfänger 34 innerhalb der Strichcodierung 58 bleiben, aus den Figuren 3 und 4 ist dies zu ersehen.

In einer anderen Ausführung der Erfindung wird auf den exzentrischen Ring 50 verzichtet und wird am Flansch 20 selbst eine Führung für die Abdeckung 22 vorgesehen, die einen Mantel ausbildet, der zentrisch zur Achse 52 und damit exzentrisch zur Achse 54, der Achse des Flansches 20, ist.

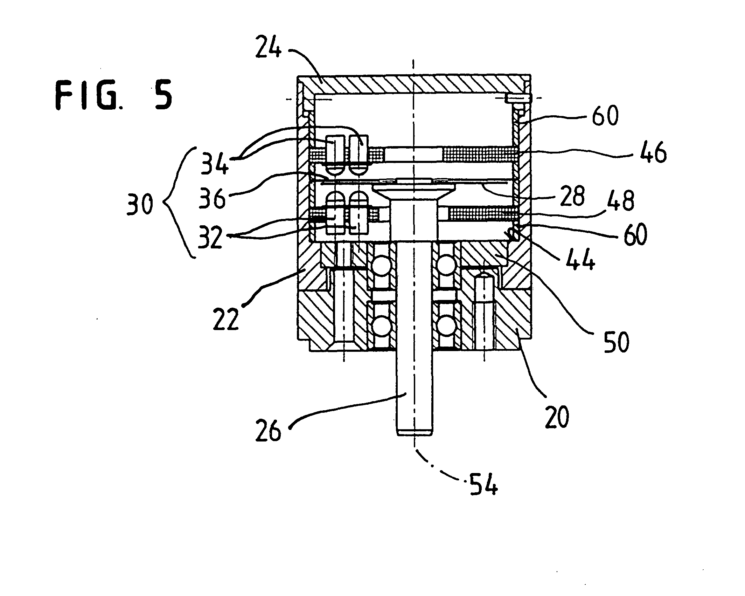

Im Ausführungsbeispiel nach Figur 5 hat die Abdeckung 22 nicht die vielstufige Ausbildung wie im vorangegangenen Ausführungsbeispiel, sondern lediglich eine Stufe, die Stufe 44, auf der sich der Ring 50 abstützt. Ansonsten ist die Abdeckung 22 innen zylindrisch. Die einzelnen Baugruppen, nämlich die Träger 46 und 48 und die Blende 36, sind durch Distanzringe 60 auf Abstand voneinander gehalten und festgelegt.

## Patentansprüche

1. Drehimpulsgeber,
- mit einem Gehäuse, das einen Flansch (20) aufweist,
- mit einer Welle (26), die drehbar im Flansch (20) gelagert ist,
- mit einer Codescheibe (28), die mit der Welle (26) drehverbunden ist und
- mit einer mit der Codescheibe (28) zusammenwirkenden Abtasteinheit (30), die a) mindestens einen Lichtemitter (32) und mindestens einen, diesem zugeordneten Lichtempfänger (34) aufweist, wobei sich die Codescheibe (28) im Lichtweg zwischen Lichtemitter (32) und Lichtempfänger (34) befindet, und die b) gegenüber der Codescheibe (28) verstellbar ist,
dadurch gekennzeichnet, daß die Abtasteinheit (30) auf einem Kreisbogen bewegbar angeordnet ist, der ein Zentrum hat, das gegenüber der Achse (52) der Welle (26) um das Exzentermaß e versetzt ist.

2. Drehimpulsgeber nach Anspruch 1, dadurch gekennzeichnet, dass die Codescheibe (28) eine sich in radialer Richtung erstreckende Codierung, insbesondere einen optischen Strichcode aufweist, und dass das Exzentermaß e kleiner ist als die radiale Erstreckung der Codierung auf der Codescheibe (28).

3. Drehimpulsgeber nach Anspruch 1, dadurch gekennzeichnet, dass das Gehäuse eine Abdeckung (22) hat, dass die Abtasteinheit (30) mit der Abdeckung (22) verbunden ist und dass die Abdeckung (22) gegenüber dem Flansch (20) verdrehbar ist.

4. Drehimpulsgeber nach Anspruch 3, dadurch gekennzeichnet, dass die Abdeckung (22) drehbar am Flansch (20) geführt ist.

5. Drehimpulsgeber nach Anspruch 4, dadurch gekennzeichnet, dass ein innenliegender Ring (50), vorzugsweise ein exzentrischer Ring, vorhanden ist und dass sich die Abdeckung (22) zwischen dem Flansch (20) und dem Ring (50) befindet, vorzugsweise dass der Ring (50) einen Außenmantel hat, der paßgenau an einem entsprechenden Innenmantelbereich der Abdeckung (22) anliegt.

6. Drehimpulsgeber nach Anspruch 5, dadurch gekennzeichnet, dass der Exzenterring gegen den Flansch (20) durch von außen zugängliche Spannmittel, insbesondere Schrauben, festspannbar ist, wodurch die Abdeckung (22) eingespannt wird.

7. Drehimpulsgeber nach Anspruch 1, dadurch gekennzeichnet, dass die Codescheibe (28) einen ringförmigen Bereich mit einer Strichcodierung (58) aufweist und dass diesem Bereich zwei Paare aus jeweils einem Lichtemitter (32) und einem Lichtempfänger (34) zugeordnet sind, die winkelmäßig gegeneinander versetzt angeordnet sind.

8. Drehimpulsgeber nach Anspruch 3, dadurch gekennzeichnet, dass die Abdeckung (22) ein Drehteil ist und innenliegende Stufen (38, 40, 42, 44) aufweist.

9. Drehimpulsgeber nach Anspruch 7, dadurch gekennzeichnet, dass der axiale Abstand der Stufen dem Abstand der Bauteile der Abtasteinheit (30) angepaßt ist.

10. Drehimpulsgeber nach Anspruch 7, dadurch gekennzeichnet, dass der Ring (50) an einer Stufe (44) der Abdeckung (22) anliegt.

## Claims

1. Apparatus for applying angular momentum,
- with a housing which is provided with a flange (20),
- with a shaft (26) which is rotatably carried in the flange (20),
- with a code disk (28) which is rotatably linked to the shaft (26) and
- with a scanning unit (30) cooperating with the code disk (28) and being provided with a) at least one light emitter (32) and at least one light receiver (34) assigned to said light emitter, the code disk (28) being located in the light path between the light emitter (32) and the light receiver (34) and which is b) adjustable relative to the code disk (28),
characterized in that the scanning unit (30) is movably accommodated on an arc of a circle whose centre is situated away from the axis (52) of the shaft (26) by the eccentric distance e.

2. Apparatus for applying angular momentum according to claim 1, characterized in that the code disk (28) is provided with a code information, more specifically with an optical bar code, that extends in radial direction, and that the eccentric distance e is smaller than the radial extension of the code information.

3. Apparatus for applying angular momentum according to claim 1, characterized in that the housing has a cover (22), that the scanning unit (30) is connected to the cover (22) and that the cover (22) is pivotal about the flange (20).

4. Apparatus for applying angular momentum according to claim 3, characterized in that the cover (22) is pivotally guided on the flange (20).

5. Apparatus for applying angular momentum according to claim 4, characterized in that there is provided an internal ring (50), preferably an eccentric ring, and that the cover (22) is located between the flange (20) and the ring (50), preferably that the ring (50) has an outer envelope that snugly rests on a mating region of the inner envelope of the cover (22).

6. Apparatus for applying angular momentum according to claim 5, characterized in that the eccentric ring can be stretched and clamped against the flange (20) by means of stretching means, more specifically screws, that are accessible from the outside, the cover (22) being clamped as a result thereof.

7. Apparatus for applying angular momentum according to claim 1, characterized in that the code disk (28) is provided with an annular region with a bar code information (58) and that two pairs consisting each of one light emitter (32) and one light receiver (34) are assigned to said region, said pairs being angularly staggered relative to each other.

8. Apparatus for applying angular momentum according to claim 3, characterized in that the cover (22) is a rotary member and is provided with stairs (38, 40, 42, 44) on its inner side.

9. Apparatus for applying angular momentum according to claim 7, characterized in that the axial spacing of the stairs matches the spacing of the component parts of the scanning unit (30).

10. Apparatus for applying angular momentum according to claim 7, characterized in that the ring (50) rests on a stair (44) of the cover (22).

## Revendications

1. Générateur de moment angulaire
- avec un boîtier pourvu dune bride (20),
- avec un arbre (26) supporté dans la bride (20) de manière à pouvoir effectuer un mouvement de rotation,
- avec un disque codeur (28) relié à l'arbre (26) par une liaison de rotation et
- avec un balayeur (30) coopérant avec le disque codeur (28) et étant pourvu de a) au moins une source de lumière (32) et d'au moins un récepteur de lumière (34) qui lui est associé, le disque codeur (28) se trouvant dans le chemin optique entre la source de lumière (32) et le récepteur de lumière (34) et étant b) orientable par rapport au disque codeur (28),
caractérisé en ce que le balayeur (30) est disposé de manière mobile sur un arc de cercle ayant un centre qui est décalé d'une mesure excentrique e par rapport à l'axe (52) de l'arbre (26).

2. Générateur de moment angulaire selon la revendication 1, caractérisé en ce que le disque codeur (28) est pourvu d'un codage, plus particulièrement d'un code à barres optique, qui s'étend en direction radiale et que la mesure excentrique e est inférieure à l'extension radiale du codage sur le disque codeur (28).

3. Générateur de moment angulaire selon la revendication 1, caractérisé en ce que le boîtier a un couvercle (22), que le balayeur (30) est rattaché au couvercle (22) et que le couvercle (22) peut pivoter par rapport à la bride (20).

4. Générateur de moment angulaire selon la revendication 3, caractérisé en ce que le couvercle (22) est guidé sur la bride de manière à pouvoir pivoter.

5. Générateur de moment angulaire selon la revendication 4, caractérisé en ce qu'il y a un anneau interne (50), de préférence un anneau excentrique, et que le couvercle (22) se trouve entre la bride (20) et l'anneau (50), de préférence que l'anneau (50) a une enveloppe externe qui épouse une zone correspondante de l'enveloppe interne du couvercle (22).

6. Générateur de moment angulaire selon la revendication 5, caractérisé en ce que l'anneau excentrique peut être serré par tension contre la bride (20) grâce à des moyens tendeurs, plus particulièrement des vis, accessibles de l'extérieur, de sorte que le couvercle (22) s'en trouve bridé.

7. Générateur de moment angulaire selon la revendication 1, caractérisé en ce que le disque codeur (28) est pourvu dune zone annulaire avec un codage à barres (58) et que deux paires, constituées chacune d'une source de lumière (32) et d'un récepteur de lumière (34) et décalées l'une par rapport à l'autre selon un certain angle, sont assignées à cette zone.

8. Générateur de moment angulaire selon la revendication 3, caractérisé en ce que le couvercle (22) est une pièce pivotante et qu'il est intérieurement pourvu de gradins (38, 40, 42, 44).

9. Générateur de moment angulaire selon la revendication 7, caractérisé en ce que l'écart axial des gradins est adapté à l'écart des pièces composant le balayeur (30).

10. Générateur de moment angulaire selon la revendication 7, caractérisé en ce que l'anneau (50) repose contre un gradin (44) du couvercle (22).
